# EUROPÄISCHE PATENTSCHRIFT

(11) **EP 4 515 191 B1**
(45) Veröffentlichungstag und Bekanntmachung des Hinweises auf die Patenterteilung: **06.05.2026**
(21) Anmeldenummer: 23713828.4
(22) Anmeldetag: 06.03.2023
(51) Int. Cl.: G01K 1/143

(54) **SENSORANORDNUNG ZUR VERWENDUNG MIT EINEM ARTIKEL, VORZUGSWEISE MIT EINER MEDIENFÜHRUNG**
SENSOR ARRANGEMENT FOR USE WITH AN ARTICLE, PREFERABLY WITH A MEDIA GUIDE
AGENCEMENT DE CAPTEUR POUR UNE UTILISATION AVEC UN ARTICLE, DE PRÉFÉRENCE AVEC UN GUIDE DE MILIEU

(30) Priorität: 27.04.2022 DE 102022204045
(43) Veröffentlichungstag der Anmeldung: 05.03.2025
(73) Patentinhaber: ContiTech Techno-Chemie GmbH, 61184 Karben (DE)
(72) Erfinder: RICHARDS, Justin, 34346 Hann. Münden (DE); PANNEN, Rick, 30175 Hannover (DE); CAMPANA, Manuel, 34346 Hann. Münden (DE)
(74) Vertreter: Bird & Bird LLP - Hamburg
(86) Internationale Anmeldenummer: PCT/DE2023/200047
(87) Internationale Veröffentlichungsnummer: WO 2023/208291

(56) Entgegenhaltungen:
- CN-U- 203 949 739
- US-A- 5 152 611
- US-B2- 10 905 011

## Beschreibung

Die vorliegende Erfindung betrifft eine Sensoranordnung zur Verwendung mit einem Artikel, vorzugsweise mit einer Medienführung, sowie einen Artikel, vorzugsweise eine Medienführung, mit einer derartigen Sensoranordnung.

Zum Transport bzw. zur Führung von Medien wie insbesondere von Fluiden ist die Verwendung von Schläuchen und Rohren bekannt, welche gemeinsam auch als Medienführungen bezeichnet werden können. Schläuche werden dabei als eher flexibel hinsichtlich ihres Materials angesehen, Rohre als eher starr. Zu den Fluiden gehören neben Flüssigkeiten auch Gase oder pastöse Stoffe.

Mehrere Schläuche können dabei untereinander über Schlauchkupplungen miteinander verbunden werden, welche jeweils an dem entsprechenden offenen Ende fest an dem jeweiligen Schlauch angeordnet sind. Über derartige Schlauchkupplungen können Schläuche ebenfalls mit Aggregaten verbunden werden, welche ihrerseits eine entsprechende Kupplung aufweisen. Derartige Schlauchkupplungen können als sogenannte Schnellkupplungen, im Englischen als Quick Connector bezeichnet, ausgebildet sein, welche ein schnelles und einfaches Verbinden und Lösen ermöglichen können. Derartige Schlauchkupplungen können aus Metall aber auch aus Kunststoff, insbesondere als Spritzgussteile, ausgebildet sein. Dies gilt vergleichbar für Rohre.

Für viele Anwendungen kann es sinnvoll oder sogar erforderlich sein, die Temperatur des strömenden Mediums sensorisch zu erfassen. Hierzu ist es beispielsweise bekannt, einen Temperatursensor, üblicherweise in Form eines NTC-Thermistors (Heißleiter mit negativem Temperaturkoeffizienten), in eine Öffnung einer Schnellkupplung oder eines Verbinders in Form z.B. eines T-Stück einzusetzen. Das Sensorelement bzw. der Messwertumformer des NTC-Thermistors ragt dabei durch eine Durchgangsöffnung der Schnellkupplung in das Medium hinein und hat somit direkten Kontakt zum Medium, was die Temperaturübertragung von Medium zu Messwertumformer begünstigen, d.h. die Ansprechzeit des NTC-Thermistors geringhalten kann.

Nachteilig ist hierbei, dass die Durchgangsöffnung durch die Schnellkupplung hindurch, welche der Aufnahme und Durchführung des Messwertumformers des NTC-Thermistors dient, mit aufgenommenem Messwertumformer mediendicht abzuschließen ist. Entsprechend sind Maßnahmen zu treffen, um die Dichtigkeit am Anschluss des Messwertumformers herzustellen. Diese Maßnahmen können mit höheren Kosten für zusätzliche Komponenten und dem Risiko von verbleibenden Undichtigkeiten verbunden sein.

Nachteilig ist ferner, dass beim Austausch des Messwertumformers, beispielsweise im Falle eines Defekts, ein umfangreicher Arbeitsaufwand anfallen kann. Durch die Tatsache, dass bei einer Demontage der entnommene Messwertumformer eine offene Durchgangsöffnung in das Innere der Schnellkupplung hinterlässt, muss vor dem Austausch des Messwertumformers das Medium aus dem System entfernt werden.

Alternativ ist daher bekannt, in der Schnellkupplung eine Mulde vorzusehen, welche orthogonal zum Fluss des Mediums angebracht ist. Mit anderen Worten ist für den Messwertumformer des NTC-Thermistors keine Durchgangsöffnung vorhanden, so dass die entsprechenden zuvor beschriebenen Nachteile vermieden werden können. Stattdessen ist der Messwertumformer des NTC-Thermistors in der Mulde der Schnellkupplung angeordnet und ragt somit, durch das Material der Schnellkupplung muldenförmig umgeben, in das Medium hinein.

Dabei ist zwischen der Oberfläche des Messwertumformers und der Innenwand der Mulde ein Freiraum mit einem Wärmeleitmittel auf Silikonbasis gefüllt, um die Wärmeübertragung vom Medium durch das Material der Mulde hindurch und über das Wärmeleitmittel zum Messwertumformer zu verbessern. Die Wärme des Mediums dringt somit bei diesem Aufbau durch das Material der Mulde und durch das Wärmeleitmittel hindurch und gelangt so zum Messwertumformer des NTC-Thermistors.

Nachteilig ist hierbei, dass die hohe Wärmekapazität des Materials der Mulde inklusive ihrer Füllung mit dem Wärmeleitmittel dennoch zu einer verhältnismäßig hohen Ungenauigkeit der Temperaturerfassung führt sowie eine vergleichsweise lange Ansprechzeit verursacht.

Nachteilig ist ferner, dass sich der NTC-Thermistor samt Messwertumformer nur schwierig und mit Hilfe von Werkzeugen aus der Mulde entnehmen lässt, indem an den elektrischen Kontakten des Steckverbinders des NTC-Thermistors gezogen wird. Dieser Vorgang ist sehr unpraktisch und sorgt zudem dafür, dass das flüssige Wärmeleitmittel aus der Mulde austritt. Auch können die elektrischen Kontakte hierdurch vom Steckverbinder des NTC-Thermistors abgerissen werden, was den NTC-Thermistor unbrauchbar machen würde.

Vergleichbar können auch anderen Sensoren wie beispielsweise Drucksensoren eingesetzt werden, welche den Druck des Mediums erfassen sollen.

In jedem Fall können hierzu standardisierte bzw. allgemein gebräuchliche Druck- bzw. Temperatursensoren oder auch anderen Sensoren eingesetzt werden. Dabei können die Sensoren wie zuvor beschrieben in die Medienführung oder auch in die Medienkupplung bzw. in das Medienanschlussstück integriert werden.

Derartige Medienführungen samt Medienkupplungen können für verschiedenste Medien eingesetzt werden, wie eingangs erwähnt. Beispielsweise können dies Kühlmittelleitungen wie beispielsweise CO2-Leitungen von Kühl- bzw.

Klimaanlagen sein. Diese können beispielsweise in elektrisch angetriebenen Kraftfahrzeugen eingesetzt werden. In Kraftfahrzeugen können dies aber auch Medienführungen für Kühlwasser, Öl, Kraftstoff, AdBlue, Wasserstoff oder andere Flüssigkeiten sein. In jedem Fall können die Medienführungen, je nach Anwendungsfall bzw. je nach Medium, aus Kunststoff, Gummi oder Metall, insbesondere Aluminium, bestehen bzw. dies aufweisen.

Dokument US 5 152 611 offenbart einen wärmeschrumpfbaren Artikel, der mit einem Temperaturindikator beschichtet ist.

Vergleichbare sensorische Messungen können auch bei beliebigen anderen Artikel anwendbar sein. Derartige Artikel können beliebige Produkte, Bauteile, Aggregate, Maschinen und sonstige Vorrichtungen sein.

Eine Aufgabe der vorliegenden Erfindung ist es, eine Sensoranordnung für einen Artikel, vorzugsweise für eine Medienführung, der eingangs beschriebenen Art bereit zu stellen, so dass die Anbringung von Sensorelementen auf Artikeln, vorzugsweise auf Medienführungen, verbessert werden können. Dies soll möglichst einfach, kostengünstig, flexibel einsetzbar, intuitiv nutzbar, bauraumsparend und bzw. oder langlebig erfolgen können. Vorzugsweise soll die Sensoranordnung für möglichst viele verschiedene bzw. alle möglichen Artikel verwendet werden können. Zumindest soll eine Alternative zu bekannten Sensoranordnungen für Artikel bzw. für Medienführungen geschaffen werden. Die Aufgabe wird erfindungsgemäß durch eine Sensoranordnung sowie durch einen Artikel mit den Merkmalen der unabhängigen Ansprüche gelöst. Vorteilhafte Weiterbildungen sind in den Unteransprüchen beschrieben.

Somit betrifft die vorliegende Erfindung eine Sensoranordnung zur Verwendung mit einem Artikel, vorzugsweise mit einer Medienführung, mit einem flächigen Trägerelement, mit einem Klebstoff, welcher auf der einen Seite des flächigen Trägerelements angeordnet und ausgebildet ist, durch Erwärmung zum Kleben gebracht zu werden, mit wenigstens einem Sensorelement, welches auf der anderen, dem Klebstoff abgewandten Seite des flächigen Trägerelements angeordnet ist, und mit wenigstens einem Heizelement, welche angeordnet ist, elektrisch bestromt zu werden und hierdurch den Klebstoff durch Erwärmung zum Kleben zu bringen.

Mit anderen Worten ist die erfindungsgemäße Sensoranordnung flächig ausgebildet und weist neben wenigstens einem Sensorelement zur Erfassung wenigstens einer physikalischen Größe wie beispielsweise einer Temperatur, eines Drucks oder dergleichen auch einen Klebstoff auf, welcher durch Erwärmung zum Kleben gebracht werden kann. Der Klebstoff kann hierzu lokal im Bereich des wenigstens einen Sensorelements oder auch abschnittsweise bis vollständig flächig angeordnet sein. Das entsprechende Heizelement kann aktiviert bzw. betrieben werden, beispielsweise durch die Speisung mit elektrischem Strom, um ausreichend Wärme zu erzeugen, um den Klebstoff zum Kleben zu bringen. Die erforderliche Temperatur, um den Klebstoff zum Kleben zu bringen, liegt dabei vorzugsweise deutlich über der üblichen Raum- bzw. Umgebungstemperatur, so dass das Kleben durch Heizen gezielt erfolgen kann. Das Heizelement kann als gedruckte Schaltung oder aber durch eine einfache Heizspule realisiert sein.

Erfindungsgemäß kann auf diese Art und Weise der Klebstoff gezielt durch die entsprechende Erwärmung zum Kleben gebracht werden, wenn die Sensoranordnung bzw. dessen flächiges Trägerelement wie gewünscht auf einem Artikel bzw. auf einer Medienführung aufgebracht wird, wo die entsprechende physikalische Größe sensorisch erfasst werden soll. Ein derartiger Artikel kann neben einer Medienführung, wie eingangs beschrieben, auch jeder beliebige andere Artikel sein, auf welchem die erfindungsgemäße Sensoranordnung aufgebracht und verwendet werden kann.

Gemäß einem Aspekt der Erfindung ist das flächige Trägerelement sich länglich erstreckend ausgebildet. Dies kann die Anordnung bzw. die sensorische Erfassung in der länglichen Erstreckungsrichtung als Vorzugsrichtung ermöglichen bzw. begünstigen. Die Sensoranordnung kann entsprechend auf den Artikel bzw. auf die Medienführung aufgebracht werden. Auch kann eine derartige Bauform bauraumsparend wirken, da der erforderliche Bauraum senkrecht zur länglichen Erstreckungsrichtung geringgehalten werden kann.

Gemäß einem weiteren Aspekt der Erfindung ist das Heizelement als Heizdraht ausgebildet. Unter einem Heizdraht bzw. unter einem Draht ist ein Gebilde mit zumindest im Wesentlichen rundem Querschnitt zu verstehen. Dies kann die Umsetzung vereinfachen, da Drähte, insbesondere aus elektrischen leitfähigen Materialien wie beispielsweise Kupfer, einfach und kostengünstig hergestellt und verwendet werden können.

Gemäß einem weiteren Aspekt der Erfindung ist der Heizdraht zumindest abschnittsweise, vorzugsweise im Wesentlichen, besonders vorzugsweise vollständig, randseitig am flächigen Trägerelement angeordnet. Dies kann eine wenigstens randseitige Erwärmung und Verklebung ermöglichen, wobei dies aufgrund von Wärmeleitung durch das Material des flächigen Trägerelements hindurch auch eine vollflächige Erwärmung des Klebstoffs ermöglichen kann.

Gemäß einem weiteren Aspekt der Erfindung ist das flächige Trägerelement als flexible Leiterplatte ausgebildet. Dies kann die entsprechende Umsetzung und Nutzung dessen Eigenschaften und Vorteile ermöglichen.

Gemäß einem weiteren Aspekt der Erfindung ist das Heizelement als Heizleiter ausgebildet. Dies kann die Umsetzung des Heizelements bei einer flexiblen Leiterplatte ermöglichen bzw. vereinfachen.

Gemäß einem weiteren Aspekt der Erfindung ist der Heizleiter zumindest abschnittsweise, vorzugsweise im Wesentlichen, besonders vorzugsweise vollständig, randseitig an der flexiblen Leiterplatte angeordnet. Dies kann die Umsetzung der entsprechenden zuvor beschriebenen Eigenschaften und Vorteile eines Heizelements als Heizleiter ermöglichen. Insbesondere kann dies eine randseitige Verklebung begünstigen, welche vorteilhaft für einen, insbesondere langlebigen, Halt des Sensorelements auf dem Artikel sein kann.

Gemäß einem weiteren Aspekt der Erfindung ist ein Sensorelement ein Temperatursensor. Dies kann die Umsetzung und Nutzung der Eigenschaften und Vorteile der erfindungsgemäßen Sensoranordnung bei einem Temperatursensor ermöglichen.

Gemäß einem weiteren Aspekt der Erfindung ist ein Sensorelement ein Drucksensor. Dies kann die Umsetzung und Nutzung der Eigenschaften und Vorteile der erfindungsgemäßen Sensoranordnung bei einem Temperatursensor ermöglichen.

Die vorliegende Erfindung betrifft auch einen Artikel mit wenigstens einer Sensoranordnung wie zuvor beschrieben. Hierdurch kann eine Umsetzung und Nutzung der Eigenschaften und Vorteile einer erfindungsgemäßen Sensoranordnung bei einem Artikel erfolgen.

Gemäß einem Aspekt der Erfindung ist der Artikel eine Medienführung, wobei die Medienführung eine Medienwandung aufweist, welche eine Durchflussöffnung umschließt, und wobei die Sensoranordnung der Durchflussöffnung abgewandt mittels des Klebstoffs der Sensoranordnung klebend auf der Medienwandung angeordnet ist. Hierdurch kann eine Umsetzung und Nutzung der Eigenschaften und Vorteile einer erfindungsgemäßen Sensoranordnung bei einer Medienführung wie eingangs beschrieben erfolgen.

Gemäß einem weiteren Aspekt der Erfindung weist der Artikel ferner ein Abdeckelement auf, welches die Sensoranordnung umschließt. Hierdurch kann ein Schutz gegenüber äußeren Einflüssen gegen Beschädigungen, Verschmutzungen, Berührungen und dergleichen für die Sensoranordnung geschaffen werden. Das Abdeckelement kann hierdurch um die Sensoranordnung herum, beispielsweise auf der Außenseite der Medienwandung, angeordnet und insbesondere dort verklebt werden.

Ein Ausführungsbeispiel und weitere Vorteile der Erfindung werden nachstehend im Zusammenhang mit den folgenden Figuren erläutert. Darin zeigt:
- Fig. 1: eine schematische Schnittdarstellung eines erfindungsgemäßen Artikels in Form einer Medienführung mit einer erfindungsgemäßen Sensoranordnung; und
- Fig. 2: eine Draufsicht auf die erfindungsgemäße Sensoranordnung.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

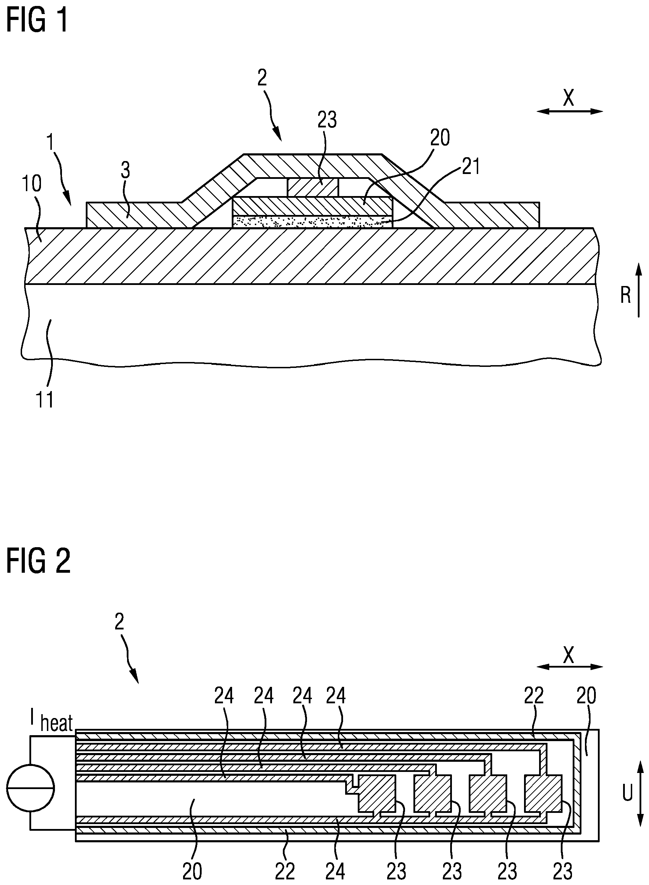

Fig. 1 zeigt eine schematische Schnittdarstellung eines erfindungsgemäßen Artikels 1 in Form einer Medienführung 1 mit einer erfindungsgemäßen Sensoranordnung 2. Die Medienführung 1 kann ein Rohr 1 sein. Die Medienführung 1 bzw. das Rohr 1 weist eine Medienwandung 10 bzw. eine Rohrwandung 10 auf, welche eine Durchflussöffnung 11 in der Umfangsrichtung U umschließt.

Die erfindungsgemäße Sensoranordnung 2, wie in der Figur 2 auch allein sowie in Draufsicht dargestellt, weist ein flächiges Trägerelement 20 in Form einer flexiblen Leiterplatte 20 mit einer länglichen Erstreckung auf, welches sich in der Ebene der Außenfläche der Medienwandung 10 erstreckt, d.h. flächig in der Längsrichtung X und in der Umfangsrichtung U. Der Medienwandung 10 zugewandt ist die untere Fläche des flächigen Trägerelements 20 vollständig bzw. vollflächig mit einem Klebstoff 21 bzw. einem Klebeelement 21 versehen, welches durch Erwärmung aktiviert bzw. zum Kleben gebracht werden kann. Dies ist bei der Anwendung bzw. der Aufbringung der erfindungsgemäßen Sensoranordnung 2 gemäß der Figur 1 bereits erfolgt, so dass die erfindungsgemäße Sensoranordnung 2 mittels des Klebstoffs 21 auf der Außenfläche der Medienwandung 10 der Medienführung 1 aufgebracht und gehalten bzw. fixiert ist.

Auf der oberen Fläche des flächigen Trägerelements 20, welche radial dem Klebstoff 21 gegenüberliegend angeordnet ist, ist randseitig ein Heizelement 22 in Form eines Heizleiters 22 aufgebracht, was auch als Heizdraht 22 umgesetzt werden könnte. Das Heizelement 22 stellt eine U-förmige endseitig offene Schlaufe auf, welche an drei Seiten bzw. an drei Kanten der Fläche des flächigen Trägerelements 20 verläuft und an der vierten Seite bzw. Kante offen ausgebildet ist. Dort kann das Heizelement 22 an beiden offenen Enden elektrisch leitfähig kontaktiert und von einem externen bzw. zusätzlichen Heizstromerzeuger (als Schaltzeichen dargestellt) mit einem Heizstrom I_{HEAT} gespeist werden, um den Klebstoff zum Kleben zu bringen.

Die obere Fläche des flächigen Trägerelements 20 weist ferner mehrere Sensorelemente 23 auf, von welchen wenigstens ein Sensorelement 23 ein Temperatursensor 23, ein Drucksensor 23 oder dergleichen ist. Die Sensorelemente 23 sind jeweils über Sensordrähte 24 bzw. über Sensorleiter 24 randseitig kontaktierbar, um mit einer Auswerteeinheit (nicht dargestellt) verbunden und betrieben bzw. ausgewertet zu werden.

Die auf die Außenfläche der Medienwandung 10 aufgeklebte erfindungsgemäße Sensoranordnung 2 wird nach außen von einem Abdeckelement 3 in Form einer randseitig aufgeklebten Folie abgedeckt und geschützt.

### Bezugszeichenliste (Teil der Beschreibung)

- I_{HEAT}: Heizstrom

- R: radiale Richtung
- U: Umfangsrichtung
- X: Längsachse

- 1: Artikel; Medienführung; Rohr
- 10: Medienwandung; Rohrwandung
- 11: Durchflussöffnung

- 2: Sensoranordnung
- 20: flächiges Trägerelement; flexible Leiterplatte
- 21: Klebstoff; Klebeelement
- 22: Heizelement; Heizdraht; Heizleiter
- 23: Sensorelemente; Temperatursensor; Drucksensor
- 24: Sensordrähte; Sensorleiter

- 3: Abdeckelement

## Patentansprüche

1. Sensoranordnung (2) zur Verwendung mit einem Artikel (1), vorzugsweise mit einer Medienführung (1),
mit einem flächigen Trägerelement (20),
mit einem Klebstoff (21), welcher auf der einen Seite des flächigen Trägerelements (20) angeordnet und ausgebildet ist,
mit wenigstens einem Sensorelement (23), welches auf der anderen, dem Klebstoff (21) abgewandten Seite des flächigen Trägerelements (20) angeordnet ist, **dadurch gekennzeichnet, dass** der Klebstoff durch Erwärmung zum Kleben gebracht wird, und die Sensoranordnung wenigstens ein Heizelement aufweist, welches angeordnet ist,
bestromt zu werden und hierdurch den Klebstoff durch Erwärmung zum Kleben zu bringen.

2. Sensoranordnung (2) nach Anspruch 1,
wobei das flächige Trägerelement (20) sich länglich erstreckend ausgebildet ist.

3. Sensoranordnung (2) nach Anspruch 1 oder 2,
wobei das Heizelement (22) als Heizdraht (22) ausgebildet ist.

4. Sensoranordnung (2) nach Anspruch 3,
wobei der Heizdraht (22) zumindest abschnittsweise, vorzugsweise im Wesentlichen, besonders vorzugsweise vollständig, randseitig am flächigen Trägerelement (20) angeordnet ist.

5. Sensoranordnung (2) nach Anspruch 1 oder 2,
wobei das flächige Trägerelement (20) als flexible Leiterplatte (20) ausgebildet ist.

6. Sensoranordnung (2) nach Anspruch 5,
wobei das Heizelement (22) als Heizleiter (22) ausgebildet ist.

7. Sensoranordnung (2) nach Anspruch 6,
wobei der Heizleiter (22) zumindest abschnittsweise, vorzugsweise im Wesentlichen, besonders vorzugsweise vollständig, randseitig an der flexiblen Leiterplatte (20) angeordnet ist.

8. Sensoranordnung (2) nach einem der vorangehenden Ansprüche, wobei ein Sensorelement (23) ein Temperatursensor (23) ist.

9. Sensoranordnung (2) nach einem der vorangehenden Ansprüche, wobei ein Sensorelement (23) ein Drucksensor (23) ist.

10. Artikel (1) mit wenigstens einer Sensoranordnung (2) nach einem der vorangehenden Ansprüche.

11. Artikel (1) nach Anspruch 10,
wobei der Artikel (1) eine Medienführung (1) ist,
wobei die Medienführung (1) eine Medienwandung (10) aufweist, welche eine Durchflussöffnung (11) umschließt, und
wobei die Sensoranordnung (2) der Durchflussöffnung (11) abgewandt mittels des Klebstoffs (21) der Sensoranordnung (2) klebend auf der Medienwandung (10) angeordnet ist.

12. Artikel (1) nach Anspruch 10 oder 11,
ferner mit einem Abdeckelement (25), welches die Sensoranordnung (2) umschließt.

## Claims

1. A sensor arrangement (2) for use with an article (1), preferably with a media guide (1), having a planar support element (20), an adhesive (21) which is arranged and formed on one side of the planar support element (20), and at least one sensor element (23) which is arranged on the other side of the planar support element (20) facing away from the adhesive (21), **characterized in that** the adhesive is made to bond by heating, and the sensor arrangement has at least one heating element which is arranged to be electrically energized and thereby to cause the adhesive to bond by heating.

2. The sensor arrangement (2) according to claim 1,
wherein the planar support element (20) is designed to extend elongately.

3. The sensor arrangement (2) according to claim 1 or 2,
wherein the heating element (22) is designed as a heating wire (22).

4. The sensor arrangement (2) according to claim 3,
wherein the heating wire (22) is arranged at least in sections, preferably substantially, particularly preferably completely, at the edge of the planar support element (20).

5. The sensor arrangement (2) according to claim 1 or 2,
wherein the planar support element (20) is designed as a flexible printed circuit board (20).

6. The sensor arrangement (2) according to claim 5,
wherein the heating element (22) is designed as a heating conductor (22).

7. The sensor arrangement (2) according to claim 6,
wherein the heating conductor (22) is arranged at least in sections, preferably substantially, particularly preferably completely, at the edge of the flexible circuit board (20).

8. The sensor arrangement (2) according to any one of the preceding claims, wherein a sensor element (23) is a temperature sensor (23).

9. The sensor arrangement (2) according to any one of the preceding claims, wherein a sensor element (23) is a pressure sensor (23).

10. An article (1) having at least one sensor arrangement (2) according to any one of the preceding claims.

11. The article (1) according to claim 10,
wherein the article (1) is a media guide (1),
wherein the media guide (1) has a media wall (10) which encloses a flow opening (11), and
wherein the sensor arrangement (2) is arranged facing away from the flow opening (11) by means of the adhesive (21) of the sensor arrangement (2) adhering to the media wall (10).

12. The article (1) according to claim 10 or 11,
further having a cover element (25) which encloses the sensor arrangement (2).

## Revendications

1. Agencement de capteur (2) pour une utilisation avec un article (1), de préférence avec un guide de milieu (1), comportant un élément support (20) plan, comportant un adhésif (21), lequel est agencé et conçu sur une face de l'élément support (20) plan, comportant au moins un élément capteur (23), lequel est agencé sur l'autre face de l'élément support (20) plan, opposée à l'adhésif (21), **caractérisé en ce que** l'adhésif est rendu collant par chauffage, et que l'agencement de capteur présente au moins un élément chauffant, lequel est agencé pour être sous tension électrique et ainsi rendre l'adhésif collant par chauffage.

2. Agencement de capteur (2) selon la revendication 1,
dans lequel l'élément support (20) plan est conçu pour s'étendre en longueur.

3. Agencement de capteur (2) selon la revendication 1 ou 2,
dans lequel l'élément chauffant (22) est conçu sous la forme d'un fil chauffant (22).

4. Agencement de capteur (2) selon la revendication 3,
dans lequel le fil chauffant (22) est agencé au moins par sections, de préférence sensiblement, et de manière particulièrement préférée complètement, au bord de l'élément support (20) plan.

5. Agencement de capteur (2) selon la revendication 1 ou 2,
dans lequel l'élément support (20) plan est conçu sous la forme d'une carte de circuit imprimé (20) souple.

6. Agencement de capteur (2) selon la revendication 5,
dans lequel l'élément chauffant (22) est conçu sous la forme d'un conducteur chauffant (22).

7. Agencement de capteur (2) selon la revendication 6,
dans lequel le conducteur chauffant (22) est agencé au moins par sections, de préférence sensiblement, et de manière particulièrement préférée complètement, au bord de la carte de circuit imprimé (20) souple.

8. Agencement de capteur (2) selon l'une quelconque des revendications précédentes, dans lequel un élément capteur (23) est un capteur de température (23).

9. Agencement de capteur (2) selon l'une quelconque des revendications précédentes, dans lequel un élément capteur (23) est un capteur de pression (23).

10. Article (1) comportant au moins un agencement de capteur (2) selon l'une quelconque des revendications précédentes.

11. Article (1) selon la revendication 10,
dans lequel l'article (1) est un guide de milieu (1),
dans lequel le guide de milieu (1) présente une paroi de milieu (10), laquelle renferme une ouverture d'écoulement traversant (11), et
dans lequel l'agencement de capteur (2) est agencé opposé à l'ouverture d'écoulement traversant (11) au moyen de l'adhésif (21) de l'agencement de capteur (2) collant à la paroi de milieu (10).

12. Article (1) selon la revendication 10 ou 11,
comportant en outre un élément de recouvrement (25), lequel renferme l'agencement de capteur (2).
